# EUROPEAN PATENT SPECIFICATION

(11) **EP 3 360 454 B1**
(45) Date of publication and mention of the grant of the patent: **25.08.2021**
(21) Application number: 16853529.2
(22) Date of filing: 03.10.2016
(51) Int. Cl.: G01B 11/02, G01B 11/14, G01B 11/245, G01B 11/24, G01B 11/04, A47L 9/28, G05D 1/02, G06T 1/00, A47L 11/40, H04N 13/239

(54) **ELECTRICAL VACUUM CLEANER**
ELEKTRISCHER STAUBSAUGER
ASPIRATEUR ÉLECTRIQUE

(30) Priority: 08.10.2015 JP 2015200186
(43) Date of publication of application: 15.08.2018
(73) Proprietor: Toshiba Lifestyle Products & Services Corporation, Kawasaki-shi, Kanagawa 210-8543 (JP)
(72) Inventor: IZAWA, Hirokazu, Kawasaki-shi Kanagawa 210-8543 (JP); MARUTANI, Yuuki, Kawasaki-shi Kanagawa 210-8543 (JP); WATANABE, Kota, Kawasaki-shi Kanagawa 210-8543 (JP); FURUTA, Kazuhiro, Kawasaki-shi Kanagawa 210-8543 (JP)
(74) Representative: Haseltine Lake Kempner LLP
(86) International application number: PCT/JP2016/079290
(87) International publication number: WO 2017/061375

(56) References cited:
- WO-A1-2014/132509
- JP-A- 2006 209 644
- JP-A- 2006 209 644
- JP-A- 2006 260 105
- JP-A- 2008 009 999
- JP-A- 2008 090 380
- JP-A- 2014 085 940
- JP-A- 2014 194 729
- US-A1- 2012 271 502
- US-A1- 2013 338 831

## Description

### TECHNICAL FIELD

Embodiments described herein relate generally to a vacuum cleaner including a plurality of image pickup means for picking up images on a traveling-direction side of a main casing.

### BACKGROUND ART

Conventionally, a so-called autonomous-traveling type vacuum cleaner (cleaning robot) which cleans a floor surface as a cleaning-object surface while autonomously traveling on the floor surface has been known.

Such a vacuum cleaner is required to avoid obstacles during its traveling. For this reason, the vacuum cleaner uses sensors, such as ultrasonic sensors and infrared sensors, for detection of obstacles which obstruct traveling. However, in the cases where these sensors are used, presence of obstacles can be detected, but it is not easy to detect the size and shape of the obstacles.

In such an autonomous-traveling type vacuum cleaner, in the cases where the vacuum cleaner is unable to detect the size and shape of an obstacle, it is required to travel while even avoiding areas in which such a vacuum cleaner can essentially travel. Thus, the area to be cleaned is limited, causing stagnation in cleaning.

Therefore, in the autonomous-traveling type vacuum cleaners, in order to enable a smoother cleaning, detection of the shape of an obstacle is desired.

### CITATION LIST

### Patent Literature

PTL 1: Japanese Laid-open Patent Publication No.2007-163223
PTL 2: Japanese Laid-open Patent Publication No.2013-235351
JP 2006 209644 A relates to a cleaning robot.
US 2013/338831 A1 and US 2012/271502 A1 both relate to a robot cleaner and associated method for controlling the robot cleaner.
JP 2014 194729 A relates to a circumferential environment recognition device, autonomous mobile system using the same, and circumferential environment recognition method.

### SUMMARY OF INVENTION

### Technical Problem

An object of the present invention is to provide a vacuum cleaner capable of detecting the shape of an object with high precision.

### Solution to Problem

The vacuum cleaner according claim 1.

### BRIEF DESCRIPTION OF DRAWINGS

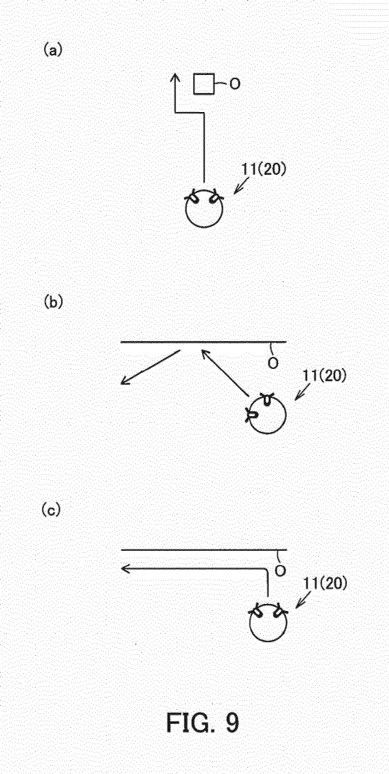

[Fig. 1]

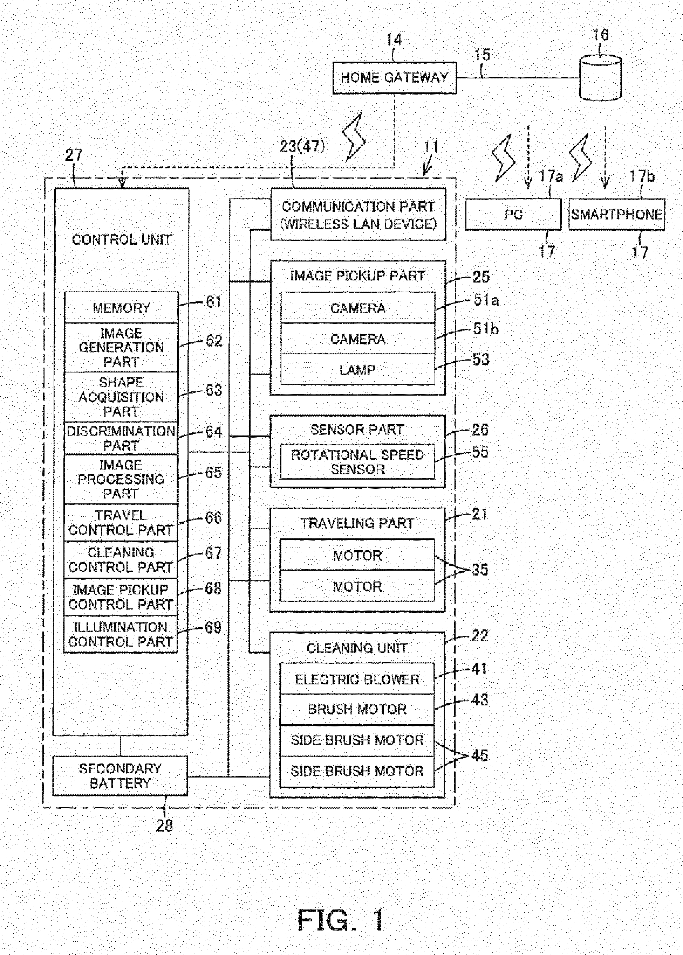

   Fig. 1 is a block diagram showing an internal structure of a vacuum cleaner according to an embodiment;
[Fig. 2]

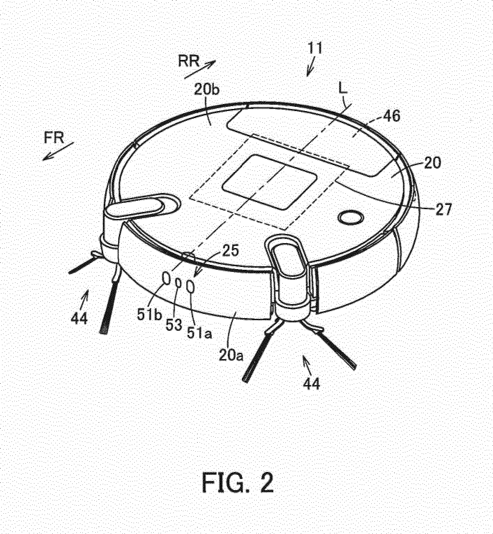

   Fig. 2 is a perspective view showing the above vacuum cleaner;
[Fig. 3]

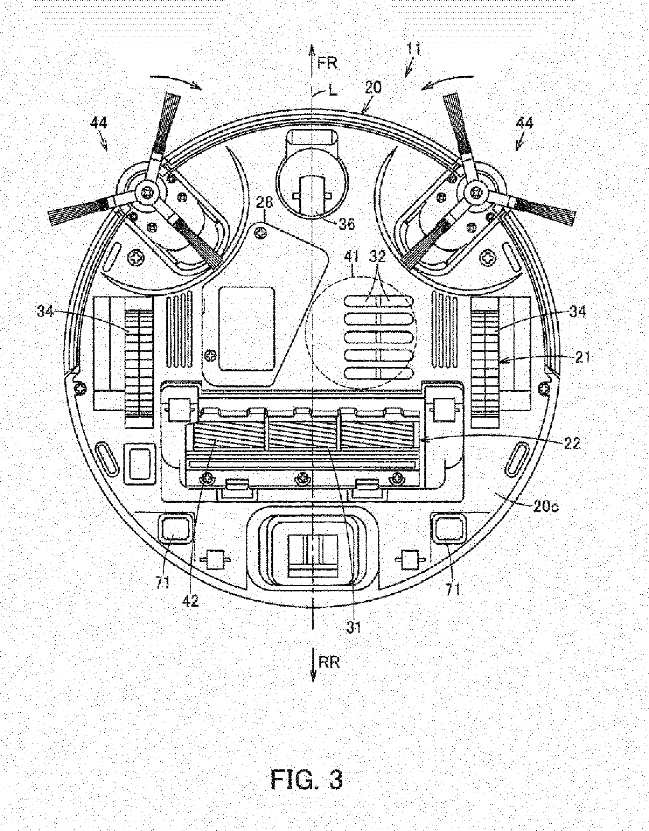

   Fig. 3 is a plan view showing the above vacuum cleaner as viewed from below;
[Fig. 4]

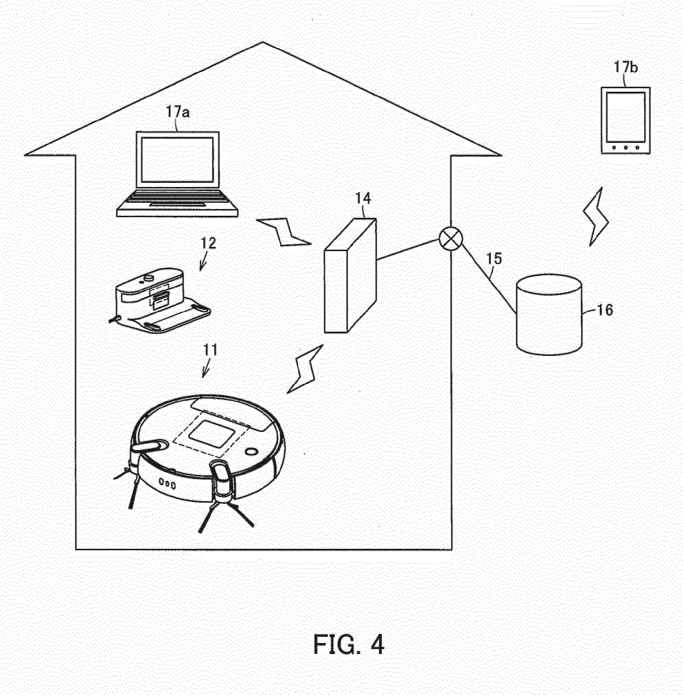

   Fig. 4 is an explanatory view schematically showing a vacuum cleaner system including the above vacuum cleaner;
[Fig. 5]

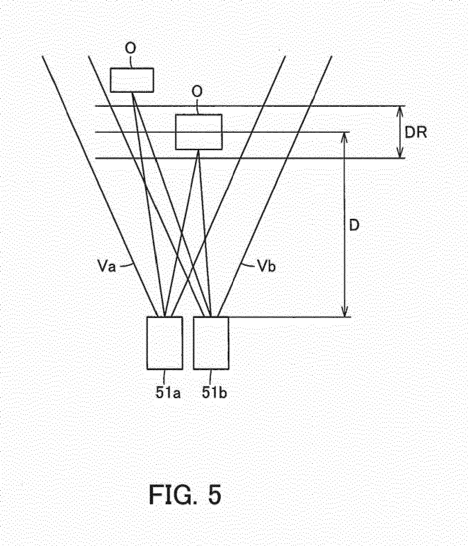

   Fig. 5 is an explanatory view schematically showing a method for calculating a distance to an object by the above vacuum cleaner;
[Fig. 6]

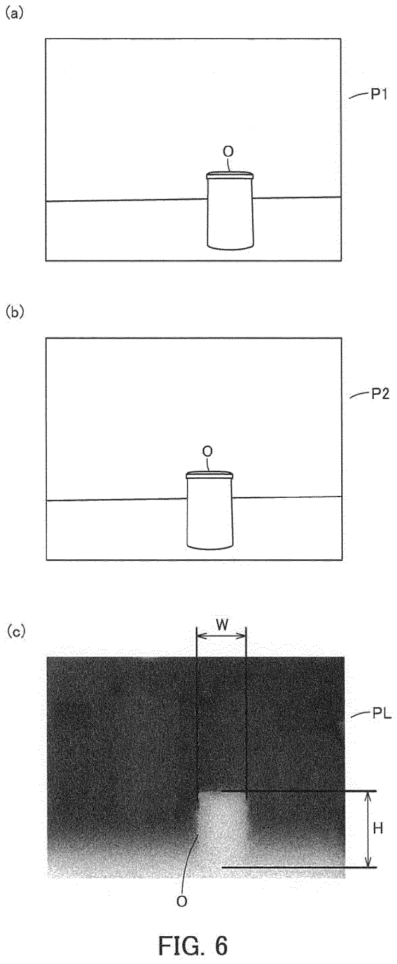

   Fig. 6 (a) is an explanatory view showing an example of an image picked up by one image pickup means, (b) is an explanatory view showing an example of an image picked up by the other image pickup means, and (c) is an explanatory view showing an example of a distance image generated based on (a) and (b);
[Fig. 7]

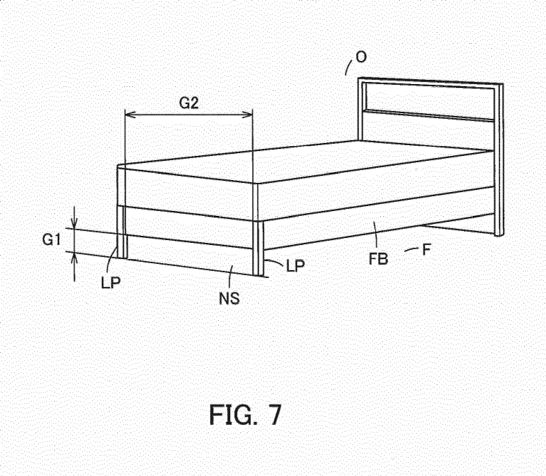

   Fig. 7 is a perspective view schematically showing an example of an object to be picked up by the image pickup means;
[Fig. 8]

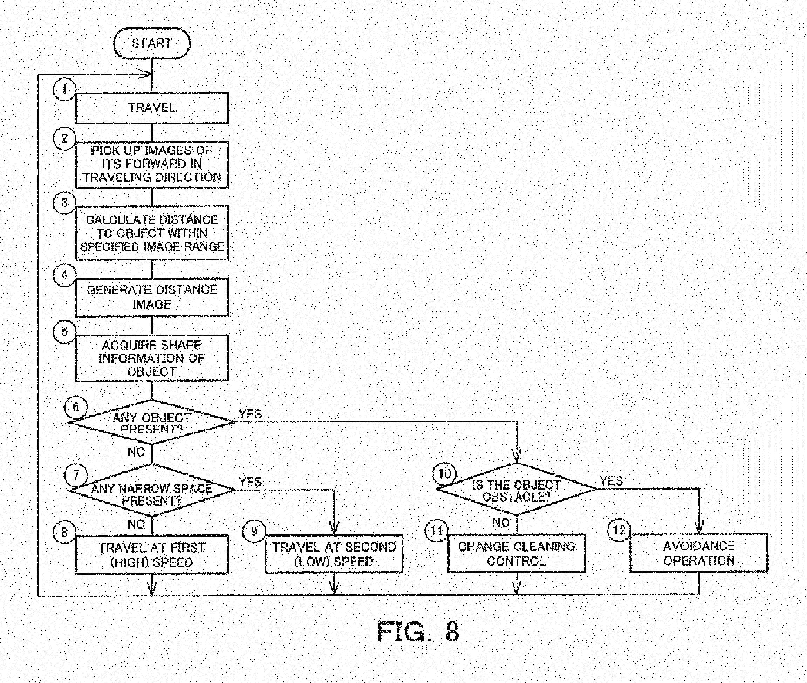

   Fig. 8 is a flowchart showing travel control of the above vacuum cleaner; and
[Fig. 9]
   Each of Fig. 9 (a), Fig. 9 (b), and Fig. 9(c) is an explanatory view showing travel control of the above vacuum cleaner.

### DESCRIPTION OF EMBODIMENTS

Hereinbelow, the constitution of an embodiment will be described with reference to the accompanying drawings.

In Fig. 1 to Fig. 4, reference sign 11 denotes a vacuum cleaner, and this vacuum cleaner 11 constitutes a vacuum cleaner device (vacuum cleaner system) in combination with a charging device (charging stand) 12 (Fig. 4) as a base device serving as a base station for charging of the vacuum cleaner 11. Then, the vacuum cleaner 11 is, in this embodiment, a so-called self-propelled robot cleaner (cleaning robot) which cleans a floor surface that is a cleaning-object surface as a traveling surface while autonomously traveling (self-propelled to travel) on the floor surface, and it is enabled to perform wired or wireless communication with a general-purpose server 16 as data storage means (a data storage part) or a general-purpose external device 17 as display means (a display part) via an (external) network 15 such as the Internet or the like by, for example, performing communication (signal transmission and reception) with a home gateway (router) 14 as relay means (a relay part) disposed in a cleaning area or the like by using wired communication or wireless communication such as Wi-Fi (registered trademark) or Bluetooth (registered trademark) or the like.

Further, the vacuum cleaner 11 includes a hollow main casing 20, a traveling part 21 to make the main casing 20 travel on a floor surface, a cleaning unit 22 for cleaning dust and dirt on the floor surface or the like, a communication part 23 for performing communication with an external device including the charging device 12, an image pickup part 25 for picking up images, a sensor part 26, control means (a control unit) 27 which is a controller for controlling the traveling part 21, the cleaning unit 22, the communication part 23, the image pickup part 25 or the like, and a secondary battery 28 for supplying electric power to the traveling part 21, the cleaning unit 22, the communication part 23, the image pickup part 25, the sensor part 26, the control means 27 or the like. In addition, the following description will be given on the assumption that a direction extending along the traveling direction of the vacuum cleaner 11 (main casing 20) is assumed as a back-and-forth direction (directions of arrows FR and RR shown in Fig. 2) while a left-and-right direction (directions toward both sides) intersecting (orthogonally crossing) the back-and-forth direction is assumed as a widthwise direction.

The main casing 20 is formed into a flat columnar shape (disc shape) or the like from a synthetic resin, for example. That is, the main casing 20 includes a side surface portion 20a, and an upper surface portion 20b (Fig. 2) and a lower surface portion 20c (Fig. 3) continuing from an upper portion and a lower portion of the side surface portion 20a, respectively. The side surface portion 20a of the main casing 20 is formed into a generally cylindrical-surface shape, and the image pickup part 25 or the like, for example, are disposed in the side surface portion 20a. Also, the upper surface portion 20b and the lower surface portion 20c of the main casing 20 are each formed into a generally circular shape, where a suction port 31 serving as a dust collecting port, an exhaust port 32 or the like are opened in the lower surface portion 20c facing the floor surface, as shown in Fig. 3.

The traveling part 21 includes driving wheels 34, 34 as a plurality (pair) of driving parts, motors 35, 35 (Fig. 1) being driving means as operating parts for driving the driving wheels 34, 34, a swing wheel 36 for swinging use, or the like.

Each of the driving wheels 34 makes the vacuum cleaner 11 (main casing 20) travel (autonomously travel) in an advancing direction and a retreating direction on the floor surface, that is, serves for traveling use, and the driving wheels 34, having an unshown rotational axis extending along a left-and-right widthwise direction, are disposed symmetrical to each other in the widthwise direction.

Each of the motors 35 (Fig. 1) is disposed, for example, in correspondence with each of the driving wheels 34, and is enabled to drive each of the driving wheels 34 independently of each other.

The swing wheel 36, which is positioned at a generally central and front portion of the lower surface portion 20c of the main casing 20 in the widthwise direction, is a driven wheel swingable along the floor surface.

The cleaning unit 22 includes an electric blower 41 which is positioned, for example, within the main casing 20 to suck dust and dirt along with air through the suction port 31 and discharge exhaust air through the exhaust port 32, a rotary brush 42 as a rotary cleaner which is rotatably attached to the suction port 31 to scrape up dust and dirt, as well as a brush motor 43 (Fig. 1) for rotationally driving the rotary brush 42, side brushes 44 which are auxiliary cleaning means (auxiliary cleaning parts) as swinging-cleaning parts rotatably attached on both sides of the main casing 20 on its front side or the like to scrape together dust and dirt, as well as side brush motors 45 (Fig. 1) for driving the side brushes 44, a dust collecting part 46 (Fig. 2) which communicates with the suction port 31 to accumulate dust and dirt or the like. In addition, with respect to the electric blower 41, the rotary brush 42 as well as the brush motor 43 (Fig. 1), and the side brushes 44 as well as the side brush motors 45 (Fig. 1), it is sufficient that least any one of these members is included.

The communication part 23 shown in Fig. 1 includes a wireless LAN device 47 as wireless communication means (a wireless communication part) for performing wireless communication with the external device 17 via the home gateway 14 and the network 15 and as cleaner signal receiving means (a cleaner signal receiving part) ; unshown transmission means (a transmission part) such as an infrared emitting element, for example, for transmitting wireless signals (infrared signals) to the charging device 12 (Fig. 4) and the like; and unshown receiving means (a reception part) such as a phototransistor for receiving wireless signals (infrared signals) from the charging device 12 or an unshown remote control and the like. In addition, the communication part 23 may be installed with an access point function, and it may perform wireless communication directly with the external device 17, not via the home gateway 14, for example. Also, a web server function may also be added to the communication part 23, for example.

The wireless LAN device 47 performs transmission and reception of various types of information with the network 15 from the vacuum cleaner 11 via the home gateway 14.

The image pickup part 25 includes a plurality of cameras 51a, 51b, for example as one and the other image pickup means (image pickup part bodies), and a lamp 53, such as an LED and the like, as illumination means (an illumination part) for illumination for these cameras 51a, 51b.

As shown in Fig. 2, the cameras 51a, 51b are disposed on both sides of a front portion in the side surface portion 20a of the main casing 20. That is, in this embodiment, the cameras 51a, 51b are disposed in the side surface portion 20a of the main casing 20 at positions which are skewed by a generally equal specified angle (acute angle) in the left-and-right direction with respect to a widthwise center line L of the vacuum cleaner 11 (main casing 20), respectively. In other words, these cameras 51a, 51b are disposed generally symmetrically in the widthwise direction with respect to the main casing 20, and a center position of these cameras 51a, 51b is generally coincident with a center position of the widthwise direction intersecting (orthogonally crossing) the back-and-forth direction, which is the traveling direction of the vacuum cleaner 11 (main casing 20). Further, these cameras 51a, 51b are disposed at generally equal positions in an up-and-down direction, that is, generally equal height positions. Therefore, these cameras 51a, 51b are set generally equal to each other in height from a floor surface while the vacuum cleaner 11 is set on the floor surface. Accordingly, the cameras 51a, 51b are disposed at separated and mutually shifted positions (positions shifted in the left-and-right direction). Also, the cameras 51a, 51b are digital cameras which pick up digital images of a forward direction, which is the traveling direction of the main casing 20, at specified horizontal angles of view (for example 105° or the like) and at specified time intervals, for example at a micro-time basis such as several tens of milliseconds or the like, or at a several-second basis or the like. Further, these cameras 51a, 51b have their image pickup ranges (fields of view) Va, Vb overlapping with each other (Fig. 5), so that (one and the other) images P1, P2 (Fig. 6(a) and Fig. 6(b)) picked up by these cameras 51a, 51b overlap with each other in the left-and-right direction at a region in which the their image pickup regions contain a forward position resulting from extending the widthwise center line L of the vacuum cleaner 11 (main casing 20). In this embodiment, the cameras 51a, 51b are so designed to pick up images of a visible light region, for example. In addition, images picked up by the cameras 51a, 51b may be compressed into a specified data format by, for example, an unshown image processing circuit or the like.

The lamp 53 serves to emit illuminating light for image pickup by the cameras 51a, 51b, and is disposed at an intermediate position between the cameras 51a, 51b, that is, at a position on the center line L in the side surface portion 20a of the main casing 20. That is, the lamp 53 is distanced generally equally from the cameras 51a, 51b. Further, the lamp 53 is disposed at a generally equal position in the up-and-down direction, that is, a generally equal height position, to the cameras 51a, 51b. Accordingly, the lamp 53 is disposed at a generally center portion in the widthwise direction between the cameras 51a, 51b. In this embodiment, the lamp 53 is designed to emit light containing the visible light region.

The sensor part 26 shown in Fig. 1 includes a rotational speed sensor 55 such as an optical encoder for detecting rotational speed of each of the driving wheels 34 (each of the motors 35), for example. Based on measured rotational speeds of the driving wheels 34 (Fig. 3) or the motors 35, the rotational speed sensor 55 detects swing angle or progressional distance of the vacuum cleaner 11 (main casing 20 (Fig. 3)). Accordingly, the rotational speed sensor 55 is a position detection sensor for detecting a relative position of the vacuum cleaner 11 (main casing 20 (Fig. 3)) from a reference position, for example the charging device 12 (Fig. 4) or the like.

The control means 27 is a microcomputer including, for example, a CPU which is a control means main body (control unit main body), a ROM which is a storage part in which fixed data such as programs to be read by the CPU have been stored, a RAM which is an area storage part for dynamically forming various memory areas such as a work area serving as a working region for data processing by programs or the like (where these component members are not shown). The control means 27 further includes, for example, a memory 61 which is storage means (a storage section) for storing therein image data picked up by the cameras 51a, 51b or the like, an image generation part 62 as distance image generation means (a distance image generation part) for calculating a distance (depth) to an object (feature point) from the cameras 51a, 51b based on images picked up by the cameras 51a, 51b, and then generating a distance image based on the calculated distance to the object, a shape acquisition part 63 as shape acquisition means for acquiring a shape of the object picked up in the distance image generated by the image generation part 62, a discrimination part 64 as discrimination means for discriminating control in accordance with the shape of the object acquired by the shape acquisition part 63, and an image processing part 65 as map generation means (a map generation part) for generating a map of a cleaning area based on obstacle discrimination implemented by the discrimination part 64 or the like. The control means 27 further includes a travel control part 66 for controlling operation of the motors 35, 35 (driving wheels 34, 34 (Fig. 3)) of the traveling part 21, a cleaning control part 67 for controlling operation of the electric blower 41, the brush motor 43 and the side brush motors 45 of the cleaning unit 22, an image pickup control part 68 for controlling the cameras 51a, 51b of the image pickup part 25, an illumination control part 69 for controlling the lamp 53 of the image pickup part 25 or the like. Then, the control means 27 has, for example, a traveling mode for driving the driving wheels 34, 34 (Fig. 3), that is, the motors 35, 35, to make the vacuum cleaner 11 (main casing 20 (Fig. 3)) autonomously travel, a charging mode for charging the secondary battery 28 via the charging device 12 (Fig. 4), and a standby mode applied during a standby state.

The memory 61 is, for example, a nonvolatile memory such as a flash memory for holding various types of stored data regardless of whether the vacuum cleaner 11 is powered on or off.

The image generation part 62 uses a known method to calculate a distance to an object (feature point) based on images picked up by the cameras 51a, 51b and the distance between the cameras 51a, 51b, and also generates a distance image showing the calculated distance to the object (feature point). That is, the image generation part 62 applies triangulation, for example, based on a distance from the cameras 51a, 51b to an object (feature point) 0 and the distance between the cameras 51a, 51b (Fig. 5), detects pixel dots indicative of identical positions from within each of the images picked up by the cameras 51a, 51b, and calculates angles of the pixel dots in the up-and-down direction and the left-and-right direction to calculate a distance from the cameras 51a, 51b at that position based on those angles and the distance between the cameras 51a, 51b. Therefore, it is preferable that images to be picked up by the cameras 51a, 51b overlap with each other as much as possible. Further, generation of this distance image by the image generation part 62 is implemented by displaying calculated pixel-dot-basis distances that are converted to visually discernible gradation levels such as brightness, color tone or the like on a specified dot basis such as a one-dot basis. In this embodiment, the image generation part 62 generates a distance image which is a black-and-white image whose brightness decreases more and more with increasing distance, that is, as a gray-scale image of 256 levels (=2⁸ with 8 bits), for example, which increases in blackness with increasing distance and increases in whiteness with decreasing distance in a forward direction from the vacuum cleaner 11 (main casing 20). Accordingly, the distance image is obtained by, as it were, visualizing a mass of distance information (distance data) of objects positioned within the image pickup ranges of the cameras 51a, 51b located forward in the traveling direction of the vacuum cleaner 11 (main casing 20). The image generation part 62 may generate a distance image showing only of the pixel dots within a specified image range in each of the images picked up by the cameras 51a, 51b, or may generate a distance image showing entire images. The image range may vary in accordance with conditions, such as the traveling speed of the vacuum cleaner 11 (main casing 20), for example, but it is preferable that the image range be at least equal to or larger than the external shape (up-and-down and left-and-right magnitudes) of the vacuum cleaner 11 (main casing 20) when the vacuum cleaner 11 (main casing 20) is positioned at a specified distance D, or at a specified position within a specified distance range DR (Fig. 5) from the cameras 51a, 51b (for example, at a position closest to the cameras 51a, 51b within the specified distance range DR (Fig. 5)).

The shape acquisition part 63 sets a specified distance D or a specified distance range DR with respect to the distance image generated by the image generation part 62, so as to acquire shape information of an object 0 positioned at the distance D or within the specified distance range DR (Fig. 5). Specifically, the shape acquisition part 63 can, with respect to an object 0, for example an empty can or the like picked up in a distance image PL as one example in a distance image, detect a pixel-dot distance at the specified distance D or within the distance range DR (Fig. 5), thereby enabling detection of a horizontal dimension, that is, a width dimension W, and an up-and-down dimension, that is, a height dimension H of the object 0 (Fig. 6(c)). This specified distance D or this specified distance range DR (Fig. 5) is set, for example, in correspondence with a traveling speed of the vacuum cleaner 11 (main casing 20) or the like. The distance D or the specified distance range DR (Fig. 5) may be variably set, for example, in correspondence with a traveling speed of the vacuum cleaner 11 (main casing 20) or the like. The shape acquisition part 63 can also indirectly acquire shape information (width dimension and height dimension) of space with no existing object or a hole part by acquiring shape information (width dimension and height dimension) of an object. For example, acquisition of the shape information of an object 0 such as a bed as shown in Fig. 7, for example, allows indirect acquisition of an up-and-down gap G1 between a floor surface F and a foot board part FB which is a top plate part, and a horizontal gap G2 between leg parts LP, LP which are mutually separated and projecting toward the floor surface F from the foot board part FB. Thus, the shape acquisition part 63 can acquire information about whether or not there is a narrow space (hole part) NS defined between these leg parts LP, LP, and shape information of the narrow space NS (width dimension and height dimension).

The discrimination part 64 discriminates, based on shape information of an object at the specified distance or within the specified distance range and shape information such as that of a narrow space positioned between objects acquired by the shape acquisition part 63, whether or not the object is an obstacle for traveling or whether or not the object is one onto which the vacuum cleaner 11 (main casing 20) can run, and also discriminates whether there is a need to change travel control of the vacuum cleaner 11 (main casing 20) or not. Further, the discrimination part 64 may discriminate whether to change cleaning control, based on shape information of the object at the specified distance or within the specified distance range, and the shape information of the narrow space positioned between the objects or the like acquired by the shape acquisition part 63. Such discrimination will be detailed later.

The image processing part 65 calculates a cleaning area in which the vacuum cleaner 11 (main casing 20) is disposed and positional relations of objects or the like positioned within this cleaning area based on the shape information of the objects acquired by the shape acquisition part 63 and a position of the vacuum cleaner 11 (main casing 20) detected by the rotational speed sensor 55 of the sensor part 26, and generates a map. In addition, the image processing part 65 is not an essential element.

The travel control part 66 controls magnitude and a direction of currents flowing through the motors 35, 35 to make the motors 35, 35 make a forward or reverse rotation, thereby controlling the drive of the motors 35, 35, and by controlling the drive of the motors 35, 35, the travel control part 66 controls the drive of the driving wheels 34, 34 (Fig. 3). In addition, the travel control part 66 is configured to control a traveling direction and/or traveling speed of the vacuum cleaner 11 (main casing 20) in accordance with discrimination by the discrimination part 64.

The cleaning control part 67 controls conduction angles of the electric blower 41, the brush motor 43 and the side brush motors 45, independently of one another, to control the drive of the electric blower 41, the brush motor 43 (rotary brush 42 (Fig. 3)) and the side brush motors 45 (side brushes 44 (Fig. 3)) . Also, the cleaning control part 67 is configured to control operation of the cleaning unit 22 in accordance with discrimination by the discrimination part 64. In addition, control units may be provided in correspondence with the electric blower 41, the brush motor 43 and the side brush motors 45, independently and respectively.

The image pickup control part 68 includes a control circuit for controlling operation of shutters of the cameras 51a, 51b, and operates the shutters at specified time intervals, thus exerting control to pick up images by the cameras 51a, 51b at specified time intervals.

The illumination control part 69 controls turn-on and -off of the lamp 53 via a switch or the like. The illumination control part 69 in this embodiment includes a sensor for detecting brightness around the vacuum cleaner 11, and makes the lamp 53 lit when the brightness detected by the sensor is a specified level or lower, and if otherwise, keeps the lamp 53 unlit.

Also, the secondary battery 28 is electrically connected to charging terminals 71, 71 as connecting parts exposed on both sides of a rear portion in the lower surface portion 20c of the main casing 20 shown in Fig. 3, for example. With the charging terminals 71, 71 electrically and mechanically connected to the charging device 12 (Fig. 4) side, the secondary battery 28 is charged via the charging device 12 (Fig. 4) .

The home gateway 14 shown in Fig. 1, which is also called an access point or the like, is installed inside a building and connected to the network 15, for example, by wire.

The server 16 is a computer (cloud server) connected to the network 15 and is capable of storing therein various types of data.

The external device 17 is a general-purpose device, for example a PC (tablet terminal (tablet PC)) 17a or a smartphone (mobile phone) 17b, which is enabled to make wired or wireless communication with the network 15 via the home gateway 14, for example, inside a building, and enabled to make wired or wireless communication with the network 15 outside the building. This external device 17 has at least a display function of displaying images.

Next, operation of the above-described embodiment will be described.

In general, work of a vacuum cleaner device is roughly divided into cleaning work for carrying out cleaning by the vacuum cleaner 11, and charging work for charging the secondary battery 28 with the charging device 12. The charging work is implemented by a known method using a charging circuit, such as a constant current circuit contained in the charging device 12, for example. Accordingly, only the cleaning work will be described below. Also, image pickup work for picking up an image of a specified object by at least one of the cameras 51a, 51b in response to an instruction from the external device 17 or the like may be included.

In the vacuum cleaner 11, at a timing such as an arrival at a preset cleaning start time or reception of a cleaning-start instruction signal transmitted by a remote control or the external device 17, for example, the control means 27 is switched over from the standby mode to the traveling mode, and the control means 27 (travel control part 66) drives the motors 35, 35 (driving wheels 34, 34) to make the vacuum cleaner 11 move from the charging device 12 by a specified distance.

Then, in the vacuum cleaner 11, the image processing part 65 generates a map of a cleaning area. When generating the map, in overview, the vacuum cleaner 11 calculates a distance to an object present in images picked up by the cameras 51a, 51b while traveling along an outer wall of the cleaning area or the like, and swirling at the position. Then, the vacuum cleaner 11 discriminates the wall and/or obstacle based on the calculated distance to generate a map based on the current position of the vacuum cleaner 11 (map generation mode). In the case where the control means 27 have discriminated that the whole cleaning area has been mapped, the control means 27 is switched over from the map generation mode to a cleaning mode which will be described later. In addition, the map, once stored in the memory 61 or the like upon its generation, may only be read from the memory 61 for the next and subsequent cleaning, eliminating the need for generating a map for each event of cleaning, but in view of cases where a cleaning area different to the map stored in the memory 61 is to be cleaned or where the cleaning area, even if unchanged from the stored one, is changed in terms of layout of objects or the like, the map may be generated as required in response to user's instruction, or at specified periods or the like, for example, or otherwise, the once generated map may be updated from time to time based on distance measurement of objects during the cleaning work.

Next, based on the generated map, the vacuum cleaner 11 performs cleaning while autonomously traveling in the cleaning area (cleaning mode). During this autonomous traveling, in overview, the vacuum cleaner 11 calculates a distance to an object in images picked by the cameras 51a, 51b while traveling forward to discriminate a wall and/or an obstacle based on the calculated distance and the generated map, and performs cleaning by the cleaning unit 22 while traveling and avoiding the wall and/or obstacle.

To explain in detail referring to the flowchart shown in Fig. 8 or the like, the control means 27 (travel control part 66) first drives the motors 35, 35 (driving wheels 34, 34) so as to make the vacuum cleaner 11 (main casing 20) travel (step 1), and then the cameras 51a, 51b driven by the control means 27 (image pickup control part 68) pick up images of its forward traveling direction (step 2). At least any one of these picked-up images can be stored in the memory 61. Then, based on these images picked up by the cameras 51a, 51b and the distance between the cameras 51a, 51b, a distance to an object (feature point) within a specified image range is calculated by the image generation part 62 (step 3). Specifically, in the case where the images P1, P2 as shown in Fig. 6(a) and Fig. 6(b) are picked up by the cameras 51a, 51b, for example, a distance of each pixel dot in the images P1, P2 is calculated by the image generation part 62. The image generation part 62 further generates a distance image based on the calculated distances (step 4). The distance image can also be stored, for example, in the memory 61. Fig. 6(c) shows one example of a distance image PL generated by the image generation part 62. Then, from the generated distance image, the shape acquisition part 63 acquires shape information of an object within a specified distance or a specified distance range (step 5). At this time, the shape acquisition part 63 can also acquire shape information of a narrow space by detecting a width dimension, a height dimension or the like as shape information of an object.

Then, the discrimination part 64 discriminates whether or not an object is present ahead of the vacuum cleaner 11 (main casing 20) at a specified distance or within a specified distance range based on the shape information of the object acquired by the shape acquisition part 63 (step 6). Specifically, the discrimination part 64 discriminates whether or not at least a part of the object is positioned within a specified image range in a distance image based on the width dimension and height dimension of the object and the horizontal or up-and-down distance between the objects acquired by the shape acquisition part 63. The image range corresponds to the external shape (up-and-down and left-and-right magnitudes) of the vacuum cleaner 11 (main casing 20) in the case where the vacuum cleaner 11 (main casing 20) is positioned at a specified distance D from the cameras 51a, 51b, or at a specified position within a specified distance range DR (for example, at the position closest to the cameras 51a, 51b within the specified distance range DR) . Accordingly, presence of an obstacle at the specified distance or within the specified distance range in the image range means that an object is positioned on the path of the vacuum cleaner 11 (main casing 20) if the vacuum cleaner 11 (main casing 20) travels forward as is.

In this step 6, upon discriminating that no object is present, it is assumed that there is space ahead where the vacuum cleaner 11 (main casing 20) can travel. So, the discrimination part 64 discriminates whether or not the space is large, that is, whether or not there is a narrow space ahead of the vacuum cleaner 11 (main casing 20) based on the shape information of the object acquired by the shape acquisition part 63 (step 7). Specifically, the discrimination part 64 discriminates that a narrow space is positioned when the horizontal gap between the objects and the up-and-down gap between the objects acquired by the shape acquisition part 63 are respectively within their corresponding specified ranges. In more detail, the discrimination part 64 discriminates that a narrow space is positioned when at least one of the difference between the horizontal gap between the objects acquired by the shape acquisition part 63 and the width dimension of the vacuum cleaner 11 (main casing 20), and the difference between the up-and-down gap between the objects acquired by the shape acquisition part 63 and the height dimension of the vacuum cleaner 11 (main casing 20) is less than its corresponding specified value. Then, the control means 27 (travel control part 66) controls the traveling speed of the vacuum cleaner 11 (main casing 20) in accordance with the discrimination.

Specifically in step 7, upon discriminating that a narrow space is not present ahead of the vacuum cleaner 11 (main casing 20) (neither of the differences described above is less than its corresponding specified value (both are equal to or above their corresponding specified values)), since it is assumed that there is wide enough space ahead of the vacuum cleaner 11 (main casing 20), or that no object is present ahead of the vacuum cleaner 11 (main casing 20), the traveling speed of the vacuum cleaner 11 (main casing 20) is set to a first speed which is a relatively high speed (step 8), and processing is returned to step 1. When performing the travel control in step 8, the control means 27 (travel control part 66) controls the drive of the motors 35, 35 (driving wheels 34, 34) so that the vacuum cleaner 11 (main casing 20) travels at the first speed. Accordingly, in the case where the vacuum cleaner 11 (main casing 20) is already traveling at the first speed, processing is returned to step 1 without any change in traveling speed.

Also, in step 7, upon discriminating that there is a narrow space ahead of the vacuum cleaner 11 (main casing 20) (at least one of the differences described above is less than its specified value), since it is assumed that the vacuum cleaner 11 (main casing 20) can enter the narrow space positioned ahead of the vacuum cleaner 11 (main casing 20), the traveling speed of the vacuum cleaner 11 (main casing 20) is set to a second speed which is a relatively low speed (step 9), processing is returned to step 1. When performing the travel control in step 9, the control means 27 (travel control part 66) controls the drive of the motors 35, 35 (driving wheels 34, 34) so that the vacuum cleaner 11 (main casing 20) travels at the second speed, in order to ensure that the vacuum cleaner 11 (main casing 20) can enter the narrow space which has less extra space and is very close in shape with respect to the external shape of the vacuum cleaner 11 (main casing 20) while traveling carefully so as not to collide with objects surrounding the narrow space. Accordingly, in the case where the vacuum cleaner 11 (main casing 20) is already traveling at the second speed, processing is returned to step 1 without any change in traveling speed.

On the other hand, in step 6, upon discriminating that an object is present, two cases are assumed: one is the case where the object positioned ahead of the vacuum cleaner 11 (main casing 20) is an obstacle for traveling; and the other is the case where the object is not an obstacle for traveling, accordingly, the discrimination part 64 discriminates whether or not the object is an obstacle based on the shape information of the object acquired by the shape acquisition part 63 (step 10). Specifically, the discrimination part 64 discriminates whether or not the object is an obstacle based on the height dimension of the object acquired by the shape acquisition part 63. In more detail, when the height dimension of the object acquired by the shape acquisition part 63 is equal to or higher than a specified height, the discrimination part 64 discriminates that the object is an obstacle. This specified height is set to, for example, a height onto which the vacuum cleaner 11 (main casing 20) runs without stranding.

Then, in step 10, upon discriminating that the object is not an obstacle (the height dimension of the object is less than the specified height), since the object is assumed to be a relatively-low-height object onto which the vacuum cleaner 11 (main casing 20) can run, for example, an entrance mat, or a rug or a carpet partially arranged in the cleaning area, or the like, the discrimination part 64 changes the cleaning control by the control means 27 (cleaning control part 67) (step 11), and then processing is returned to step 1 and the vacuum cleaner 11 (main casing 20) runs onto the object without avoiding the object. As for changing of the cleaning control in step 11, the control means 27 (cleaning control part 67) changes, for example, increasing/decreasing of input to the electric blower 41 of the cleaning unit 22, turning on/off or speed of the drive of the rotary brush 42 (brush motor 43) and/or the side brushes 44, 44 (side brush motors 45, 45). For example, in this step 11, the control means 27 increases the input to the electric blower 41 and increases the driving speed of the rotary brush 42 (brush motor 43), resulting in providing improved cleaning performance. In addition, the setting of the cleaning control may vary, for example, due to a plurality of threshold values set with respect to height dimensions of objects, that is, depending on whether the height dimension of an object is large (thick) or small (thin).

On the one hand, in step 10, upon discriminating that the object is an obstacle (the height dimension of the object is more than a specified height dimension), since it is assumed that there is an object to be avoided or a narrow space which the vacuum cleaner 11 (main casing 20) cannot enter ahead of the vacuum cleaner 11 (main casing 20), the discrimination part 64 changes the traveling direction of the vacuum cleaner 11 (main casing 20) by the control means 27 (travel control part 66) (step 12), and processing is returned to step 1. The change of the traveling direction includes, based on the shape information of the object acquired by the shape acquisition part 63, appropriately changing the traveling direction for avoidance operation in accordance with the shape information, and selecting one or plural specified avoidance operation routines having been set in advance. As for the avoidance operation, for example, the control means 27 (travel control part 66) controls the drive of the motors 35, 35 (driving wheels 34, 34) to temporarily stop the vacuum cleaner 11 (main casing 20) with respect to an object and make the vacuum cleaner 11 (main casing 20) swing at the stopped position or a position to which the vacuum cleaner 11 (main casing 20) retreats by a specified distance, so that the vacuum cleaner 11 (main casing 20) avoids the object 0 while traveling in a crank shape as shown in Fig. 9(a) (in the case where the object 0 is relatively small), or travels in a direction apart from the object 0 or along the object 0 (in the case where the object O is a wall or the like) as shown in Fig. 9(b) and Fig. 9(c).

As a result, while autonomously traveling all over the floor surface including the narrow space NS (Fig. 7) or the like within the cleaning area under avoidance of obstacles, the vacuum cleaner 11 (main casing 20) makes the control means 27 (cleaning control part 67) operate the cleaning unit 22 to clean dust and dirt on the floor surface. That is, the vacuum cleaner 11 performs continuous operation such as continuing the cleaning work even if an obstacle is detected.

As for the cleaning unit 22, dust and dirt on the floor surface are collected to the dust collecting unit 46 via the suction port 31 by the electric blower 41, the rotary brush 42 (brush motor 43) or the side brushes 44 (side brush motors 45) driven by the control means 27 (cleaning control part 67) . Then, in the vacuum cleaner 11, in the case where the cleaning of the mapped cleaning area ends or in a specified condition such as the capacity of the secondary battery 28 is decreased to a specified level during the cleaning work, the control means 27 (travel control part 66) controls the operation of the motors 35, 35 (driving wheels 34, 34) to return to the charging device 12, the specified level being insufficient for completion of cleaning or image pickup (the voltage of the secondary battery 28 has decreased to around a discharge termination voltage). Thereafter, when the charging terminals 71, 71 and terminals for charging of the charging device 12 are docked together, the cleaning work is ended and the control means 27 is switched over to the standby mode or the charging mode.

In addition, data of images stored in the memory 61 are transmitted to the server 16 via the home gateway 14 and the network 15 by means of the wireless LAN device 47, upon a return of the vacuum cleaner 11 to the charging device 12, from time to time during the cleaning work, at specified time intervals, in the event of a request from the external device 17, or the like, for example. In addition, when data that have been transmitted completely are deleted from the memory 61 or overwritten when storing new data, the capacity of the memory 61 can be used efficiently.

The server 16 is enabled to store image data transmitted from the vacuum cleaner 11 and the image data may be downloaded in response to a request (access) from the external device 17.

Then, on the external device 17, an image downloaded from the server 16 is displayed.

In accordance with the above-described embodiment, the distance image of the objects positioned on the traveling-direction side of the vacuum cleaner 11 (main casing 20) is generated by the image generation part 62 based on images picked up by the cameras 51a, 51b, and the shape information of the picked-up objects is acquired by the shape acquisition part 63 from the generated distance image, thereby enabling to detect not only presence of objects but also shapes of objects with high precision.

Also, the shape acquisition part 63 acquires the horizontal gaps of the objects positioned on the traveling-direction side of the vacuum cleaner 11 (main casing 20), thereby enabling to easily discriminate whether or not there is any space in the horizontal direction which the vacuum cleaner 11 (main casing 20) can enter.

Similarly, the shape acquisition part 63 acquires the up-and-down gaps of the objects positioned on the traveling-direction side of the vacuum cleaner 11 (main casing 20), thereby enabling to easily discriminate whether or not there is any space in the up-and-down direction which the vacuum cleaner 11 (main casing 20) can enter.

Therefore, based on the shape information such as of the acquired horizontal and up-and-down gaps, the shape acquisition part 63 acquires whether or not there is a narrow space NS (Fig. 7) ahead of the vacuum cleaner 11 (main casing 20), thereby enabling to perform travel control so that the vacuum cleaner 11 (main casing 20) enters between the leg parts LP, LP in accordance with the lower parts of the object O such as a bed (Fig. 7), between the leg parts of an object such as a chair, or the like.

Then, the control means 27 controls the operation of the motors 35, 35 (driving wheels 34, 34) so as to control the traveling of the vacuum cleaner 11 (main casing 20) in accordance with the shape information acquired by the shape acquisition part 63, thereby enabling to avoid in advance any obstacle which obstructs the traveling or the like prior to a collision, and making the vacuum cleaner 11 (main casing 20) travel along in the periphery of the obstacle without traveling unnecessarily long way to avoid the obstruct, resulting in enabling to improve traveling performance. This allows thorough cleaning in the cleaning area, resulting in improving cleaning performance.

Specifically, the control means 27 controls the operation of the motors 35, 35 (driving wheels 34, 34) so as to control the traveling speed of the vacuum cleaner 11 (main casing 20) in accordance with the shape information of the object acquired by the shape acquisition part 63. For example, in the case where there is relatively large space ahead of the vacuum cleaner 11 (main casing 20), or the like, that is, any obstacle which obstructs traveling is not present, such control can make the vacuum cleaner 11 (main casing 20) travel at a relatively high speed for efficient cleaning, while in the case where the vacuum cleaner 11 (main casing 20) enters the narrow space NS (Fig. 7) which is very close in width dimension and height dimension with respect to the external shape of the vacuum cleaner 11 (main casing 20), such control can make the vacuum cleaner 11 (main casing 20) travel at a relatively low speed so as to facilitate entering into the narrow space NS.

Similarly, the control means 27 controls the operation of the motors 35, 35 (driving wheels 34, 34) so as to control the traveling direction of the vacuum cleaner 11 (main casing 20) in accordance with the shape information of the object acquired by the shape acquisition part 63. Such control can provide, for example, different avoidance operation or the like in accordance with the shape of the obstacle positioned ahead of the vacuum cleaner 11 (main casing 20).

Accordingly, the travel control of the vacuum cleaner 11 (main casing 20), which is suitable for the shape of an object, can be performed.

Also, in the case where the shape acquisition part 63 acquires the shape information of the object at the specified distance acquired from the distance image, the travel control can be performed so that the vacuum cleaner 11 (main casing 20) does not collide with the object positioned at the specified distance when the vacuum cleaner 11 (main casing 20) travels from the current position to a position apart by the specified distance.

Further, in the case where the shape acquisition part 63 acquires the shape of the object within the specified distance range acquired from the distance image, the travel control can be performed so that the vacuum cleaner 11 (main casing 20) does not collide with the object positioned within the distance range when the vacuum cleaner 11 (main casing 20) travels from the current position to the position where the front part thereof is positioned the specified distance range.

Also, the control means 27 controls the operation of the cleaning unit 22 in accordance with the shape information of the object acquired by the shape acquisition part 63. Such control can improve cleaning efficiency by providing cleaning conditions suitable for a floor surface upon discriminating that the type of the floor surface is changed, such as when discriminating that the vacuum cleaner 11 (main casing 20) runs onto, for example, a rug, a carpet or the like, based on the shape information of the object acquired by the shape acquisition part 63.

In addition, in the above-described embodiment, the travel control of the vacuum cleaner 11 (main casing 20) by the control means 27 (travel control part 66) based on the shape information of the object acquired by the shape acquisition part 63 is not limited to the form described above, and may be set arbitrarily in accordance with a shape of an object.

Also, the cameras 51a, 51b may be disposed at generally equal positions in the left-and-right direction on the main casing 20 (side surface portion 20a), that is, disposed above and below with each other.

Further, at least one of the cameras 51a, 51b may also be an infrared camera for picking up images of infrared regions.

Also, for image display, in addition to a constitution including processing for enabling image display on the external device 17 by the control means 27, processing for enabling image display on the external device 17 with an exclusive-use program (application) installed respectively in the external device 17 for example, is also possible, or preprocessing may be done by the control means 27 or the server 16 in advance, and then image display is enabled with a general-purpose program such as a browser of the external device 17 or the like. That is, a constitution in which display control means (a display control part) implements the image display may be adopted through a program stored in the server 16, a program installed on the external device 17, or the like.

Further, although data of images or the like temporarily stored in the memory 61 are transmitted to the server 16 and stored in the server 16, the data may be stored in the memory 61 as it is or stored in the external device 17.

Also, images picked up by the cameras 51a, 51b or distance images generated by the image generation part 62 may also be displayed, for example, on a display part provided in the vacuum cleaner 11 itself without being limited to the external device 17. In this case, there is no need to transmit data from the memory 61 to the server 16 via the home gateway 14 and the network 15, allowing the constitution and control of the vacuum cleaner 11 to be further simplified.

Then, although the image generation part 62, the shape acquisition part 63, the discrimination part 64, the cleaning control part 67, the image pickup control part 68 and the illumination control part 69 are each provided in the control means 27, these members may also be provided as independent members, respectively, or two or more among these members may be arbitrarily combined with one another.

Further, the distance calculation by the image generation part 62 may be applied not only during cleaning work but also to any arbitrary use during traveling of the vacuum cleaner 11 (main casing 20).

Three or more of the image pickup means may be set. That is, it is sufficient that there are plural units of image pickup means, regardless of the number of the units.

While certain embodiments have been described, these embodiments have been presented by way of example only, and are not intended to limit the scope of the inventions . Indeed, the novel embodiments described herein may be embodied in a variety of other forms; furthermore, various omissions, substitutions, and changes in the form of the embodiments described herein may be made, as long as they fall under the scope of the invention, which is defined in the appended claims.

## Claims

1. A vacuum cleaner comprising:
a main casing (20);
a driving wheel (34) for enabling the main casing (20) to travel;
control means (27) for controlling drive of the driving wheel (34) to make the main casing (20) autonomously travel;
a plurality of image pickup means (51a, 51b) disposed apart from each other in the main casing (20) for picking up images on a traveling-direction side of the main casing (20) so that their fields of view overlap with each other;
distance image generation means (62) for generating a distance image of an object (O) positioned on the traveling-direction side based on the images picked up by the plurality of image pickup means (51a, 51b); and
**characterised in that** the vacuum cleaner further comprises shape acquisition means (63) for setting a specified distance (D) or a specified distance range (DR) with respect to the distance image generated by the distance image generation means (62) and acquiring shape information of the object (O) positioned at the specified distance (D) or within the specified distance range (DR).

2. The vacuum cleaner according to Claim 1, wherein
the shape acquisition means (63) is configured to acquire whether or not a narrow space is positioned on the traveling-direction side of the main casing (20) based on shape information of an object.

3. The vacuum cleaner according to any one of claims 1 or 2, wherein
the shape acquisition means (63) is configured to acquire a horizontal gap to objects positioned on the traveling-direction side of the main casing (20).

4. The vacuum cleaner according to any one of Claims 1 to 3, wherein
the shape acquisition means (63) is configured to acquire an up-and-down gap to an object positioned on the traveling-direction side of the main casing (20).

5. The vacuum cleaner according to any one of Claims 1 to 4, wherein
the control means (27) is configured to control operation of the driving wheel (34) so as to control traveling of the main casing (20) in accordance with the shape information of the object acquired by the shape acquisition means (63).

6. The vacuum cleaner according to Claim 5, wherein
the control means (27) is configured to control operation of the driving wheel (34) so as to control traveling speed of the main casing (20) in accordance with the shape information of the object acquired by the shape acquisition means (63).

7. The vacuum cleaner according to Claim 5 or claim 6, wherein
the control means (27) is configured to control operation of the driving wheel (34) so as to control a traveling direction of the main casing (20) in accordance with the shape information of the object acquired by the shape acquisition means (63).

8. The vacuum cleaner according to any one of Claims 1 to 7, wherein
the control means (27) is configured to control operation of a cleaning unit (22) in accordance with the shape information of the object acquired by the shape acquisition means (63).

## Patentansprüche

1. Staubsauger umfassend:
ein Hauptgehäuse (20);
ein Antriebsrad (34), um eine Bewegung des Hauptgehäuses (20) zu ermöglichen;
Steuereinrichtung (27) zur Steuerung des Antriebs des Antriebsrads (34), um das Hauptgehäuse (20) autonom fahren zu lassen;
eine Vielzahl von Bildaufnahmeeinrichtungen (51a, 51b), die voneinander beabstandet in dem Hauptgehäuse (20) angeordnet sind, zum Aufnehmen von Bildern auf einer Fahrtrichtungsseite des Hauptgehäuses (20), sodass sich ihre Sichtfelder überlappen;
Entfernungsbild-Erzeugungseinrichtung (62) zum Erzeugen eines Entfernungsbilds eines Objekts (O), das auf Fahrtrichtungsseite positioniert ist, basierend auf den Bildern, die von der Vielzahl von Bildaufnahmeeinrichtungen (51a, 51b) aufgenommen werden; und
**dadurch gekennzeichnet, dass** der Staubsauger ferner eine Formerfassungseinrichtung (63) zum Einstellen eines spezifizierten Abstands (D) oder eines spezifizierten Abstandsbereichs in Bezug auf das von den Entfernungsbild-Erzeugungseinrichtungen (62) erzeugte Abstandsbild und zum Erfassen von Forminformationen des in dem spezifizierten Abstand innerhalb des spezifizierten Abstandsbereichs (DR) positionierten Objekts (O) umfasst.

2. Staubsauger gemäß Anspruch 1, wobei
die Formerfassungseinrichtung (63) konfiguriert ist, um zu erfassen, ob eine Engstelle auf der Fahrtrichtungsseite des Hauptgehäuses (20) positioniert ist, basierend auf Forminformationen eines Objekts.

3. Staubsauger gemäß einem der Ansprüche 1 oder 2, wobei
die Formerfassungseinrichtung (63) konfiguriert ist, um einen horizontalen Spalt zu Objekten zu erfassen, die auf der Seite der Fahrtrichtung des Hauptgehäuses (20) positioniert sind.

4. Staubsauger gemäß einem der Ansprüche 1 bis 3, wobei
die Formerfassungseinrichtung (63) konfiguriert ist, um einen Aufwärts- und Abwärtsspalt zu einem Objekt zu erfassen, das auf der Fahrtrichtungsseite des Hauptgehäuses (20) positioniert ist.

5. Staubsauger gemäß einem der Ansprüche 1 bis 4, wobei
die Steuereinrichtung (27) konfiguriert ist, um einen Betrieb des Antriebsrads (34) zu steuern, um ein Fahren des Hauptgehäuses (20) in Übereinstimmung mit den Forminformationen des Objekts, die durch die Formerfassungseinrichtung (63) erfasst wurden, zu steuern.

6. Staubsauger gemäß Anspruch 5, wobei die Steuereinrichtung (27) konfiguriert ist, um einen Betrieb des Antriebsrads (34) zu steuern, um eine Fahrgeschwindigkeit des Hauptgehäuses (20) in Übereinstimmung mit den Forminformationen des Objekts, die durch die Formerfassungseinrichtung (63) erfasst wurden, zu steuern.

7. Staubsauger gemäß Anspruch 5 oder Anspruch 6, wobei
die Steuereinrichtung (27) konfiguriert ist, um einen Betrieb des Antriebsrads (34) zu steuern, um eine Fahrtrichtung des Hauptgehäuses (20) in Übereinstimmung mit den Forminformationen des Objekts, die durch die Formerfassungseinrichtung (63) erfasst wurden, zu steuern.

8. Staubsauger gemäß einem der Ansprüche 1 bis 7, wobei
die Steuereinrichtung (27) konfiguriert ist, um einen Betrieb einer Reinigungseinheit (22) in Übereinstimmung mit den von der Formerfassungseinrichtung (63) erfassten Forminformationen des Objekts zu steuern.

## Revendications

1. Un aspirateur comprenant :
un boîtier principal (20) ;
une roue d'entraînement (34) pour permettre au boîtier principal (20) de se déplacer;
un moyen de commande (27) pour commander l'entraînement de la roue d'entraînement (34) pour faire déplacer le boîtier principal (20) de manière autonome ;
une pluralité de moyens de capture d'image (51a, 51b) disposés à l'écart les uns des autres dans le boîtier principal (20) pour capturer des images sur un côté de direction de déplacement du boîtier principal (20) de sorte que leurs champs de vision se chevauchent ;
un moyen de génération d'image de distance (62) pour générer une image de distance d'un objet (O) positionné du côté de la direction de déplacement sur la base des images capturées par la pluralité de moyens de capture d'image (51a, 51b) ; et
**caractérisé en ce que** l'aspirateur comprend en outre
un moyen d'acquisition de forme (63) pour régler une distance spécifiée (D) ou une plage de distances spécifiée (DR) par rapport à l'image de distance générée par le moyen de génération d'image de distance (62) et acquérir des informations de forme de l'objet (O) positionné à la distance spécifiée (D) ou dans la plage de distance spécifiée (DR).

2. L'aspirateur selon la revendication 1, dans lequel
le moyen d'acquisition de forme (63) est configuré pour acquérir si oui ou non un espace étroit est positionné du côté de direction de déplacement du boîtier principal (20) sur la base des informations de forme d'un objet.

3. L'aspirateur selon l'une quelconque des revendications 1 ou 2, dans lequel
le moyen d'acquisition de forme (63) est configuré pour acquérir un espace horizontal par rapport aux objets positionnés du côté de direction de déplacement du boîtier principal (20).

4. L'aspirateur selon l'une quelconque des revendications 1 à 3, dans lequel
le moyen d'acquisition de forme (63) est configuré pour acquérir un espace de haut en bas par rapport à un objet positionné du côté de direction de déplacement du boîtier principal (20).

5. L'aspirateur selon l'une quelconque des revendications 1 à 4, dans lequel
le moyen de commande (27) est configuré pour commander le fonctionnement de la roue d'entraînement (34) de manière à commander le déplacement du boîtier principal (20) conformément aux informations de forme de l'objet acquises par le moyen d'acquisition de forme (63).

6. L'aspirateur selon la revendication 5, dans lequel
le moyen de commande (27) est configuré pour commander le fonctionnement de la roue d'entraînement (34) de manière à commander la vitesse de déplacement du boîtier principal (20) conformément aux informations de forme de l'objet acquises par le moyen d'acquisition de forme (63).

7. L'aspirateur selon la revendication 5 ou la revendication 6, dans lequel
le moyen de commande (27) est configuré pour commander le fonctionnement de la roue d'entraînement (34) de manière à commander une direction de déplacement du boîtier principal (20) conformément aux informations de forme de l'objet acquises par le moyen d'acquisition de forme (63).

8. L'aspirateur selon l'une quelconque des revendications 1 à 7, dans lequel
le moyen de commande (27) est configuré pour commander le fonctionnement d'une unité de nettoyage (22) conformément aux informations de forme de l'objet acquises par le moyen d'acquisition de forme (63).
